(19) Europäisches Patentamt
European Patent Office
Office européen des brevets

(11) **EP 3 113 540 B1**

(12) **EUROPEAN PATENT SPECIFICATION**

(45) Date of publication and mention
of the grant of the patent:
**06.11.2019 Bulletin 2019/45**

(51) Int Cl.:
***H04W 28/22*** *(2009.01)*   ***H04W 72/12*** *(2009.01)*
***H04W 88/08*** *(2009.01)*

(21) Application number: **14888468.7**

(22) Date of filing: **04.04.2014**

(86) International application number:
**PCT/CN2014/074795**

(87) International publication number:
**WO 2015/149348 (08.10.2015 Gazette 2015/40)**

(54) **METHOD AND DEVICE FOR ADJUSTING DATA TRANSMISSION RATE**

VERFAHREN UND VORRICHTUNG ZUR EINSTELLUNG DER -DATENÜBERTRAGUNGSRATE

PROCÉDÉ ET DISPOSITIF POUR RÉGLER UNE VITESSE DE TRANSMISSION DE DONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.01.2017 Bulletin 2017/01**

(73) Proprietor: **Huawei Technologies Co., Ltd.
Longgang District
Shenzhen, Guangdong 518129 (CN)**

(72) Inventors:
 • **WANG, Jueping
   Shenzhen
   Guangdong 518129 (CN)**
 • **ZHANG, Si
   Shenzhen
   Guangdong 518129 (CN)**

 • **JIANG, Yajun
   Shenzhen
   Guangdong 518129 (CN)**

(74) Representative: **Goddar, Heinz J.
Boehmert & Boehmert
Anwaltspartnerschaft mbB
Pettenkoferstrasse 22
80336 München (DE)**

(56) References cited:
**EP-A1- 2 658 138      WO-A1-2014/008775
CN-A- 1 882 126      CN-A- 101 420 262
CN-A- 101 499 964    CN-A- 102 740 377
CN-A- 103 024 827    US-A1- 2012 213 078**

## Description

## TECHNICAL FIELD

The present invention relates to the communications field, and in particular, to a method and apparatus for adjusting a data transmission rate in the communications field.

## BACKGROUND

As a new generation of mobile communication technology after the 3rd generation (3rd Generation, 3G for short) mobile communications, Long Term Revolution (Long Term Evolution, LTE for short) is gradually and widely deployed because the LTE has higher spectrum efficiency, a higher air interface rate, and better coverage performance. In numerous LTE technologies, a technology for processing physical layer data is one of key LTE technologies. A frame structure of an LTE physical layer may be constituted by 10ms radio frames, where each radio frame may include 10 subframes (Sub-fame), each subframe may include two timeslots (Slot), and duration of each timeslot is 0.5ms.

In the LTE, a smallest bearer unit of the physical layer data may be a resource element (Resource Element, RE for short), and one RE may be constituted by one subcarrier in a frequency domain and one symbol (Symbol) in a time domain. A bearer unit of the physical layer data may further include, for example, a resource block (Resource Block, RB for short). In the frequency domain, one RB may include 12 consecutive subcarriers, where each subcarrier can occupy a bandwidth of 15KHz, that is, one RB can occupy a bandwidth of 180KHz; in the time domain, one RB may include 7 consecutive symbols.

In the LTE, when the physical layer data is being processed, it is generally necessary to transmit the data from one functional unit to another functional unit, and this type of transmission may be long-distance transmission. For example, in a distributed base station, the physical layer data needs to be transmitted between a remote radio unit (Remote Radio Unit, RRU for short) and a baseband unit (Base Band Unit, BBU for short), and a transmission distance may be tens of kilometers long. However, transmission bandwidth resources for transmitting the physical layer data are generally limited, especially when the physical layer data is transmitted over a long distance. The limited data transmission bandwidth resources may lead to deteriorating data transmission quality and a data transmission failure. Therefore, in a case in which a data transmission condition is limited or a data transmission condition changes, a data transmission rate needs to be adjusted, so as to transmit data properly. However, in the LTE, once a spectral bandwidth of a system is set, a quantity of RBs for transmitting data is also determined. Because there is a correspondence between a quantity of RBs and a data transmission rate, after the quantity of RBs is determined, the transmission rate of the physical layer data is kept unchanged. For example, if the spectral bandwidth of the system is set to 20M, the quantity of RBs for transmitting the data is 100 according to a protocol, and in this case, the physical layer data can only be transmitted at a constant rate. If the data transmission rate needs to be changed, a setting of the spectral bandwidth of the system needs to be changed, and therefore a cell needs to be deleted or set up, which may cause service interruption of the system. Therefore, in a case in which a data transmission condition is limited or a data transmission condition changes, a system cannot adjust a data transmission rate while keeping a service running, which seriously affects data transmission performance of the system.

EP 2 658 138 A1 discloses a central baseband processing unit CBPU, including a switching module and at least one base band unit BBU and further including a resource mapping module. The resource mapping module is configured to perform resource block demapping for uplink frequency domain baseband signals obtained through FFT, and demultiplex signals of each user from corresponding subcarriers; the switching module is configured to transmit the signals of each user to the corresponding BBU; and the BBU is configured to process the received user signals. Correspondingly, embodiments of the present invention also disclose an RRU and a frequency domain transmission method. The technical solution provided in the present invention can improve transmission performance of a C-RAN system.

## SUMMARY

In view of this, the present invention provides an apparatus for adjusting a data transmission rate according to claim 1 and a method for adjusting a data transmission rate according to claim 7. Embodiments of the present invention can adjust the data transmission rate while keeping a service running.

Based on the foregoing technical solutions, according to the method and the apparatus for adjusting a data transmission rate in the embodiments of the present invention, first, frequency domain data borne by an occupied data bearer unit is buffered, and frequency domain data borne by an idle data bearer unit is discarded, and then, the buffered frequency domain data is transmitted at a lower transmission rate, which can avoid system service interruption caused by changing a data transmission rate by using a method for changing a spectral bandwidth setting of a system, such as deleting a cell, setting up a cell, and the like. In this way, the data transmission rate can be adjusted while a system service is kept running, so as to adapt to different data transmission conditions, thereby improving transmission performance of the system.

## BRIEF DESCRIPTION OF DRAWINGS

To describe the technical solutions in embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.

FIG. 1 is a schematic diagram of an application scenario of an embodiment of the present invention;
FIG. 2 is a schematic flowchart of a method for adjusting a data transmission rate according to an embodiment of the present invention;
FIG. 3 is another schematic flowchart of a method for adjusting a data transmission rate according to an embodiment of the present invention;
FIG. 4 is a schematic flowchart of a method for decreasing a data transmission rate according to an embodiment of the present invention;
FIG. 5 is still another schematic flowchart of a method for adjusting a data transmission rate according to an embodiment of the present invention;
FIG. 6 is a schematic flowchart of a method for increasing a data transmission rate according to an embodiment of the present invention;
FIG. 7 is a schematic block diagram of an apparatus for adjusting a data transmission rate according to an embodiment of the present invention;
FIG. 8 is another schematic block diagram of an apparatus for adjusting a data transmission rate according to an embodiment of the present invention;
FIG. 9 is a schematic block diagram of a first processing module according to an embodiment of the present invention;
FIG. 10 is still another schematic block diagram of an apparatus for adjusting a data transmission rate according to an embodiment of the present invention;
FIG. 11 is yet another schematic block diagram of an apparatus for adjusting a data transmission rate according to an embodiment of the present invention;
FIG. 12 is a schematic block diagram of a second processing module according to an embodiment of the present invention; and
FIG. 13 is a schematic block diagram of an apparatus for adjusting a data transmission rate according to another embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

It should be understood that the technical solutions in the embodiments of the present invention may be applied to various communications systems, such as a Long Term Evolution (Long Term Evolution, "LTE" for short) system, an LTE frequency division duplex (Frequency Division Duplex, "FDD" for short) system, or an LTE time division duplex (Time Division Duplex, "TDD" for short) communications system. It should be understood that only the LTE system is used as an example to describe the embodiments of the present invention; however, the present invention is not limited thereto.

It should further be understood that in the embodiments of the present invention, user equipment (User Equipment, "UE" for short) may be referred to as a terminal (Terminal), a mobile station (Mobile Station, "MS" for short), a mobile terminal (Mobile Terminal), and the like. The user equipment may communicate with one or more core networks by using a radio access network (Radio Access Network, "RAN" for short). For example, the user equipment may be a mobile phone (also referred to as a "cellular" phone) or a computer with a mobile terminal. For example, the user equipment may further be a portable, pocket-sized, handheld, computer built-in, or in-vehicle mobile apparatus, which exchanges voice and/or data with the radio access network.

In the embodiments of the present invention, a base station may be an evolved NodeB (evolved NodeB, eNB for short) in the LTE system, or a similar device in another communications system.

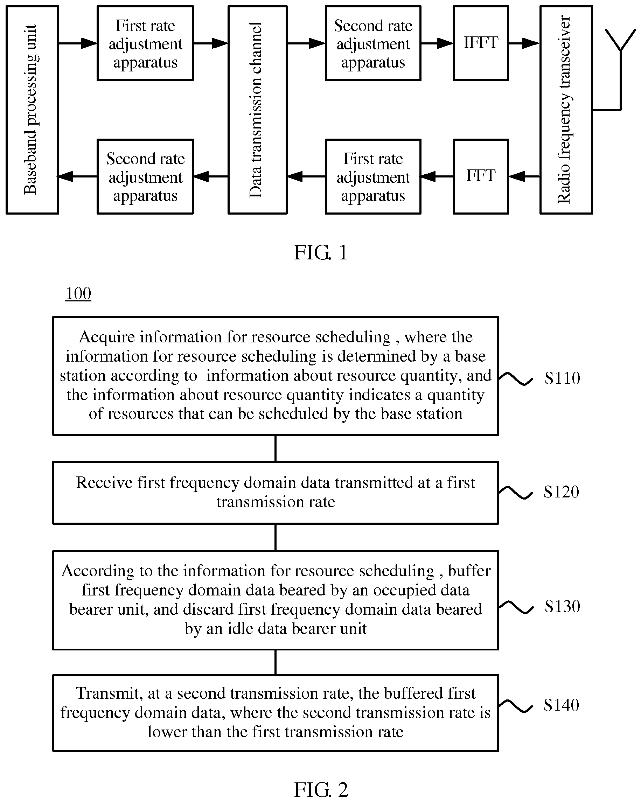

FIG. 1 shows an application scenario of an embodiment of the present invention. As shown in FIG. 1, a first rate adjustment apparatus for adjusting a data transmission rate according to this embodiment of the present invention may receive frequency domain data of downlink physical layer that is transmitted by a baseband processing unit at a first transmission rate. After a data transmission rate of the frequency domain data of downlink physical layer is adjusted by the first rate adjustment apparatus, the frequency domain data of downlink physical layer may be sent to a data transmission channel at a second transmission rate, where the second transmission rate is lower than the first transmission rate. After being transmitted through the data transmission channel at the second transmission rate, the frequency domain data of downlink physical layer may be input to a second rate adjustment apparatus, and may be output at the first transmission rate after the data transmission rate is adjusted by the second rate adjustment apparatus. The output frequency domain data of downlink physical layer may be transformed into time domain data by using inverse fast Fourier transformation (Inverse Fast Fourier Transformation, IFFT for short), and then the time domain data may be sent to user equipment by using a radio frequency transceiver.

Similarly, as shown in FIG. 1, the first rate adjustment apparatus for adjusting a data transmission rate according to this embodiment of the present invention may receive uplink physical layer frequency domain data that is sent by the radio frequency transceiver at the first transmission rate and is transformed by using fast Fourier transformation (Fast Fourier Transformation, FFT for short). After a data transmission rate of the uplink physical layer frequency domain data is adjusted by the first rate adjustment apparatus, the uplink physical layer frequency domain data may be sent to the data transmission channel at the second transmission rate. After being transmitted through the data transmission channel at the second transmission rate, the uplink physical layer frequency domain data may be input to the second rate adjustment apparatus again, and may be output to the baseband processing unit of the base station at the first transmission rate after the data transmission rate is adjusted by the second rate adjustment apparatus.

It should be understood that, the data transmission channel shown in FIG. 1 may be an optical fiber transmission channel between devices, or may be a microwave transmission channel between devices, which is not limited in the present invention.

It should further be understood that, the application scenario shown in FIG. 1 is merely used as an example for describing this embodiment of the present invention; however, an application scenario of the present invention is not limited thereto. For example, after being transmitted through the data transmission channel at the second transmission rate, the uplink physical layer frequency domain data may be directly input to the baseband processing unit without adjusting a transmission rate by using the second rate adjustment apparatus. For another example, after being transmitted through the data transmission channel at the second transmission rate, the frequency domain data of downlink physical layer may be directly input to the radio frequency transceiver and the like, without adjusting a transmission rate by using the second rate adjustment apparatus.

FIG. 2 shows a schematic flowchart of a method 100 for adjusting a data transmission rate according to an embodiment of the present invention, where the method 100 may be executed by an apparatus for adjusting a data transmission rate. The apparatus may be a standalone device, and is disposed in a data transmission path; or the apparatus may be integrated into a base station, and is disposed in a data transmission path. As shown in FIG. 2, the method 100 includes the following steps:

S110. Acquire information for resource scheduling that is determined by a base station according to information about resource quantity, where the information about resource quantity indicates a quantity of resources that can be scheduled by the base station.

S120. Receive first frequency domain data transmitted at a first transmission rate.

S130. Buffer, according to the information for resource scheduling, first frequency domain data borne by an occupied data bearer unit, and discard, according to the information for resource scheduling, first frequency domain data borne by an idle data bearer unit.

S140. Transmit, at a second transmission rate, the buffered first frequency domain data, where the second transmission rate is lower than the first transmission rate.

In order to adjust a data transmission rate without interrupting a service of a communications system, after receiving first frequency domain data of an uplink physical layer or first frequency domain data of a downlink physical layer, the apparatus for adjusting a data transmission rate may determine, according to the information for resource scheduling that is determined by the base station based on the information about resource quantity, whether multiple data bearer units that are scheduled by the base station to bear data are occupied data bearer units or idle data bearer units. In this way, the apparatus can buffer the first frequency domain data borne by the occupied data bearer unit, and discard the first frequency domain data borne by the idle data bearer unit, so as to reduce transmitted frequency domain data, thereby decreasing the data transmission rate.

Therefore, according to the method for adjusting a data transmission rate in this embodiment of the present invention, first, frequency domain data borne by an occupied data bearer unit is buffered, and frequency domain data borne by an idle data bearer unit is discarded, and then, the buffered frequency domain data is transmitted at a lower transmission rate, which can avoid system service interruption caused by changing a data transmission rate by using a method for changing a spectral bandwidth setting of a system, such as deleting a cell, setting up a cell, and the like. In this way, the data transmission rate can be adjusted while a system service is kept running, so as to adapt to different data transmission conditions, thereby improving transmission performance of the system.

Specifically, in S110, the apparatus for adjusting a data transmission rate may first acquire the information for resource scheduling determined by the base station, where the information for resource scheduling may indicate a scheduled data bearer unit, and may further indicate state information of the scheduled data bearer unit, where the state information may include an occupied state and an idle state.

It should be understood that, in this embodiment of the present invention, the apparatus may acquire, in multiple manners, the information for resource scheduling determined by the base station, for example, the apparatus may directly receive the information for resource scheduling sent by the base station, or the apparatus may acquire, by parsing arrived physical layer data, the information for resource scheduling determined by the base station, which, however, is not limited in the present invention.

It should further be understood that, in this embodiment of the present invention, the data bearer unit is a resource for bearing data, for example, the data bearer unit is an RB, and for another example, the data bearer unit is a user data unit constituted by multiple RBs, which, however, is not limited in the present invention.

In this embodiment of the present invention, the information for resource scheduling is determined by the base station according to the information about resource quantity, and the information about resource quantity indicates the quantity of resources that can be scheduled by the base station, for example, a quantity of resources that can be scheduled by the base station in a timeslot.

For example, based on an LTE transmission protocol, a quantity, of RBs, corresponding to a spectral bandwidth of 20M is 100, that is, a quantity of available RBs that are scheduled by the base station is 100, and the base station needs to transmit 100 RBs of data in one timeslot. However, because of reasons such as a limitation on the data transmission rate, assuming that merely 50 RBs of data can be transmitted in one timeslot, the quantity of available RBs that are scheduled by the base station is reduced from the original 100 to 50.

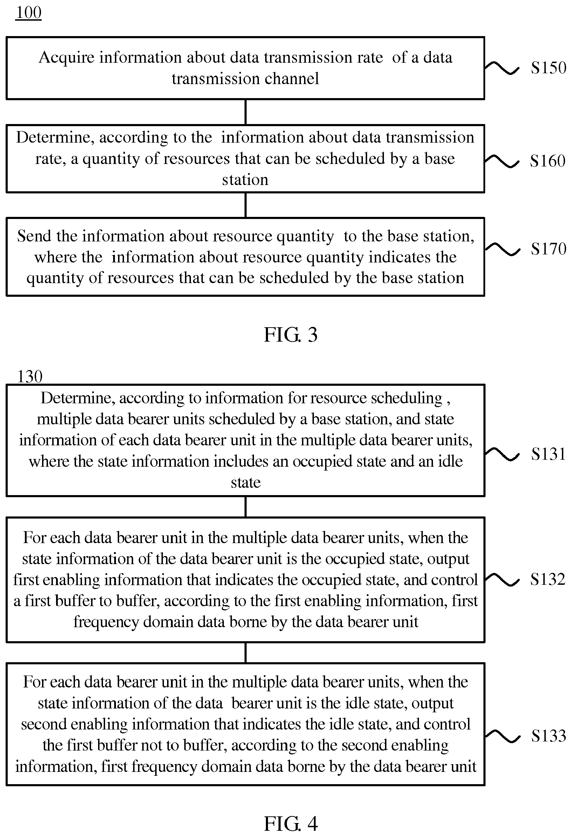

The information about resource quantity may be provided for the base station by another network device, for example, may be provided for the base station by a network management device, or the information about resource quantity may be determined according to information about data transmission rate by the apparatus for adjusting a data transmission rate, and then provided for the base station. Specifically, as shown in FIG. 3, before the acquiring information for resource scheduling that is determined by a base station according to information about resource quantity, the method 100 further includes the following steps:

S150. Acquire information about data transmission rate of a data transmission channel.
S160. Determine, according to the information about data transmission rate, the quantity of resources that can be scheduled by the base station.
S170. Send the information about resource quantity to the base station, where the information about resource quantity indicates the quantity of resources that can be scheduled by the base station.

In S150, the apparatus for adjusting a data transmission rate may acquire the information about data transmission rate of the data transmission channel. The information about data transmission rate may include, for example, information about data transmission rate of each transmission channel, and may include, for example, a maximum data transmission rate of each transmission channel. For another example, the information about data transmission rate may include a data transmission rate of a transmission channel whose maximum transmission rate is relatively the smallest, and the like.

In S160, the apparatus for adjusting a data transmission rate may determine the quantity of resources that can be scheduled by the base station, for example, according to a correspondence between a data transmission rate of a transmission channel and a quantity of resources.

Specifically, it is assumed that a data bit width of an RE at a physical layer is a complex number with a 16-bit real-part bit width and a 16-bit imaginary-part bit width. A data amount of an RB is 84 REs of data, and one timeslot is 0.5ms; for an LTE system whose spectral bandwidth is 20M, transmission of 100 RBs of data needs to be completed within 0.5ms, that is, transmission of 8400 REs of data needs to be completed. It is assumed that data is transmitted based on a common public radio interface (Common Public Radio Interface, CPRI for short) protocol. The quantity of resources that can be scheduled by the base station can be determined according to the correspondence between a data transmission rate and a quantity of resources, where the correspondence is, for example, the following equation 1:

$$N=(V*T)/(12*7*2*P*W)(1)$$

N is a quantity of RBs that can be scheduled within one timeslot; V is a data transmission rate (in a unit of bit per second) based on the CPRI protocol; T is duration of one timeslot (in a unit of second); P is overheads of the CPRI transmission protocol (if 8b/10b encoding is used, an overhead value is 10/8*16/15); and W is a data bit width (for example, 16 bits); in addition, because data in the RE is a complex number, and has two pieces of 16-bit data: a real part and an imaginary part, a denominator in the foregoing equation 1 further needs to be multiplied by a factor 2.

In S 170, the apparatus for adjusting a data transmission rate may send the information about resource quantity to the base station, where the information about resource quantity indicates the quantity of resources that can be scheduled by the base station.

It should be understood that, in this embodiment of the present invention, the apparatus for adjusting a data transmission rate may further determine, based on a data sampling manner, a quantity of antennas, or another factor, the quantity of resources that can be scheduled by the base station, which is not limited in this embodiment of the present invention.

In S120, the apparatus for adjusting a data transmission rate receives the first frequency domain data transmitted at the first transmission rate, where the first frequency domain data may include uplink physical layer frequency domain data sent by a radio frequency transceiver, or may include frequency domain data of downlink physical layer sent by a baseband processing unit.

Specifically, the receiving first frequency domain data transmitted at a first transmission rate includes:

receiving uplink physical layer frequency domain data that is sent by a radio frequency transceiver at the first transmission rate; and
receiving frequency domain data of downlink physical layer that is sent by a baseband processing unit at the first transmission rate.

In S130, optionally, as shown in FIG. 4, the buffering, according to the information for resource scheduling, first frequency domain data borne by an occupied data bearer unit, and discarding, according to the information for resource scheduling, first frequency domain data borne by an idle data bearer unit includes the following steps:

S131. Determine, according to the information for resource scheduling, multiple data bearer units scheduled by the base station, and state information of each data bearer unit in the multiple data bearer units, where the state information includes an occupied state and an idle state.
S132. For each data bearer unit in the multiple data bearer units, when the state information of the data bearer unit is the occupied state, output first enabling information that indicates the occupied state, and control a first buffer to buffer, according to the first enabling information, the first frequency domain data borne by the data bearer unit.
S133. For each data bearer unit in the multiple data bearer units, when the state information of the data bearer unit is the idle state, output second enabling information that indicates the idle state, and control the first buffer skipping buffering, according to the second enabling information, the first frequency domain data borne by the data bearer unit.

Specifically, in this embodiment of the present invention, for each data bearer unit in the multiple data bearer units, when the state information of the data bearer unit is the occupied state, the first frequency domain data borne by the data bearer unit is buffered, and when the state information of the data bearer unit is the idle state, the first frequency domain data borne by the data bearer unit is not buffered, that is, the first frequency domain data borne by the data bearer unit is discarded.

It should be understood that, in this embodiment of the present invention, a granularity for processing the first frequency domain data by the apparatus for adjusting a data transmission rate may be a data bearer unit, where the data bearer unit may be a resource block RB; or the data bearer unit may be a resource smaller than an RB, for example, the data bearer unit may be one half of the RB, or may be one quarter of the RB, and the smallest data bearer unit is a resource element RE; or the data bearer unit may further be a resource larger than an RB, for example, the data bearer unit may be a resource unit constituted by multiple RBs.

In this embodiment of the present invention, the apparatus for adjusting a data transmission rate can determine, according to the information for resource scheduling, the data bearer units scheduled by the base station, and the state information of each data bearer unit. Optionally, the determining, according to the information for resource scheduling, multiple data bearer units scheduled by the base station, and state information of each data bearer unit in the multiple data bearer units includes:

determining, according to the information for resource scheduling, multiple resource block RB resources scheduled by the base station, and state information of each RB resource in the multiple RB resources; and
determining, according to a correspondence between an RB resource and a data bearer unit, the multiple data bearer units scheduled by the base station, and the state information of each data bearer unit in the multiple data bearer units.

For example, when the data bearer unit is a user data unit constituted by multiple RBs, the apparatus for adjusting a data transmission rate may determine, according to the correspondence between an RB resource and a data bearer unit, a data bearer unit corresponding to an RB resource scheduled by the base station, and may determine state information of the data bearer unit according to state information of the RB resource, that is, determining that the data bearer unit is in the occupied state or in the idle state.

In this embodiment of the present invention, the first enabling information is used to indicate that the data bearer unit is in the occupied state; and the second enabling information is used to indicate that the data bearer unit is in the idle state. The first enabling information and the second enabling information may be represented by a high potential and a low potential of a signal, for example, a high-potential signal may represent the first enabling information, and a low-potential signal may represent the second enabling information; or the first enabling information may be represented by using a low-potential signal, and the second enabling information may be represented by using a high-potential signal, which, however, is not limited in the present invention.

In this embodiment of the present invention, when the first frequency domain data received by the apparatus for adjusting a data transmission rate is the frequency domain data of downlink physical layer, it is possible that the frequency domain data of downlink physical layer may further include reference signal (Reference Signal, RS for short) data, for example, RS data used for channel quality detection. In a current protocol, even a data bearer unit that bears the RS data is in the idle state, the RS data cannot be discarded; therefore, when the received first frequency domain data is being processed, the RS data needs to be buffered, and needs to be transmitted at the second transmission rate.

Specifically, in this embodiment of the present invention, before the transmitting, at a second transmission rate, the buffered first frequency domain data, the method 100 further includes:

> determining reference signal data included in received frequency domain data of downlink physical layer transmitted at the first transmission rate; and buffering the reference signal data.

It should be understood that, after buffering the reference signal data, likewise, the apparatus for adjusting a data transmission rate transmits, at the second transmission rate, the buffered reference signal data, and the first frequency domain data borne by the occupied data bearer unit.

In S140, the apparatus for adjusting a data transmission rate transmits, at the second transmission rate, the buffered first frequency domain data, where the second transmission rate is lower than the first transmission rate.

Specifically, the apparatus for adjusting a data transmission rate may send, at the second transmission rate, buffered frequency domain data of downlink physical layer to the data transmission channel or the radio frequency transceiver; and the apparatus for adjusting a data transmission rate may also send, at the second transmission rate, buffered uplink physical layer frequency domain data to the data transmission channel or the baseband processing unit, which is not limited in this embodiment of the present invention.

It should be understood that, in various embodiments of the present invention, serial numbers of the foregoing processes do not mean an execution sequence. The execution sequence of the processes should be determined according to functions and internal logic thereof, and should not be construed as any limitation on implementation processes of the embodiments of the present invention.

Therefore, according to the method for adjusting a data transmission rate in this embodiment of the present invention, first, frequency domain data borne by an occupied data bearer unit is buffered, and frequency domain data borne by an idle data bearer unit is discarded, and then, the buffered frequency domain data is transmitted at a lower transmission rate, which can avoid system service interruption caused by changing a data transmission rate by using a method for changing a spectral bandwidth setting of a system, such as deleting a cell, setting up a cell, and the like. In this way, the data transmission rate can be adjusted while a system service is kept running, so as to adapt to different data transmission conditions, thereby improving transmission performance of the system.

In this embodiment of the present invention, according to the method for adjusting a data transmission rate, a transmission rate of frequency domain data may be adjusted from the first transmission rate to the second transmission rate, and accordingly, in the method, the transmission rate of the frequency domain data may be further adjusted from the second transmission rate to the first transmission rate.

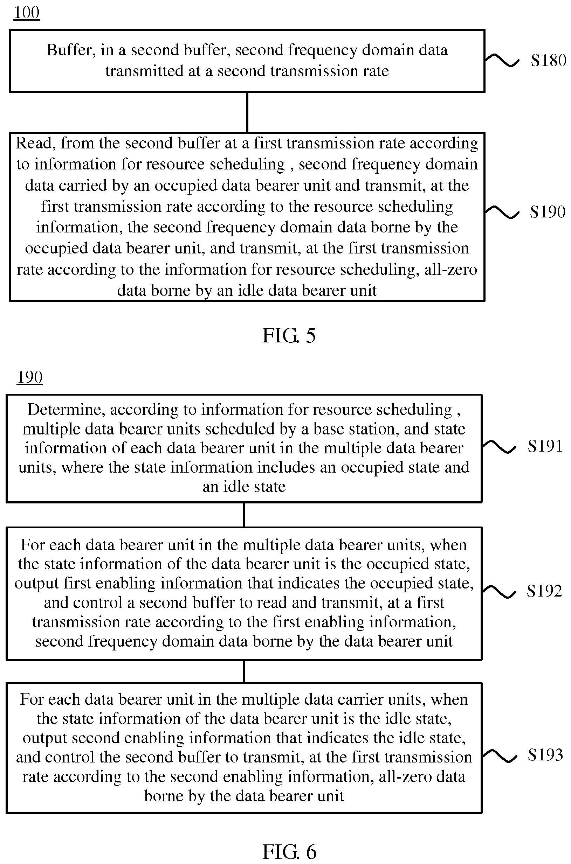

Specifically, in this embodiment of the present invention, as shown in FIG. 5, the method 100 further includes the following steps:

> S180. Buffer, in a second buffer, second frequency domain data transmitted at the second transmission rate.
> 5190. Read, from the second buffer at the first transmission rate according to the information for resource scheduling, second frequency domain data borne by the occupied data bearer unit and transmit, at the first transmission rate according to the information for resource scheduling, the second frequency domain data borne by the occupied data bearer unit, and transmit, at the first transmission rate according to the information for resource scheduling, all-zero data borne by the idle data bearer unit.

It should be understood that, in this embodiment of the present invention, the second frequency domain data transmitted at the second transmission rate may be uplink physical layer frequency domain data, or may be frequency domain data of downlink physical layer, which is not limited in this embodiment of the present invention.

It should further be understood that, in this embodiment of the present invention, the apparatus for adjusting a data transmission rate may acquire, in multiple manners, the information for resource scheduling determined by the base station according to the information about resource quantity, for example, the apparatus may directly receive the information for resource scheduling sent by the base station, or the apparatus may acquire, by parsing arrived physical layer data, the information for resource scheduling determined by the base station, which, however, is not limited in this embodiment of the present invention.

Specifically, as shown in FIG. 6, optionally, the reading, from the second buffer at the first transmission rate according to the information for resource scheduling, second frequency domain data borne by the occupied data bearer unit and transmitting, at the first transmission rate according to the information for resource scheduling, the second frequency domain data borne by the occupied data bearer unit, and transmitting, at the first transmission rate according to the information for resource scheduling, all-zero data borne by the idle data bearer unit includes the following steps:

S191. Determine, according to the information for resource scheduling, multiple data bearer units scheduled by the base station, and state information of each data bearer unit in the multiple data bearer units, where the state information includes an occupied state and an idle state.

S192. For each data bearer unit in the multiple data bearer units, when the state information of the data bearer unit is the occupied state, output first enabling information that indicates the occupied state, and control the second buffer to read and transmit, at the first transmission rate according to the first enabling information, the second frequency domain data borne by the data bearer unit.

S193. For each data bearer unit in the multiple data bearer units, when the state information of the data bearer unit is the idle state, output second enabling information that indicates the idle state, and control the second buffer to transmit, at the first transmission rate according to the second enabling information, the all-zero data borne by the data bearer unit.

That is, in this embodiment of the present invention, for the occupied data bearer unit, the apparatus for adjusting a data transmission rate reads and transmits, according to the information for resource scheduling at the first transmission rate that is higher than the second transmission rate of the data transmission channel, the buffered second frequency domain data borne by the data bearer unit; and for the idle data bearer unit, because the data borne by the idle data bearer unit is not buffered, outputs the all-zero data at the first transmission rate according to the information for resource scheduling, so as to constitute frequency domain data borne by the idle data bearer unit, and transmit the frequency domain data at the first transmission rate. Because the apparatus can transmit, at the first transmission rate that is higher than the second transmission rate, the buffered second frequency domain data, and insert the all-zero data borne by the idle data bearer unit, transmitted frequency domain data increases, which can improve the data transmission rate.

Therefore, according to the method for adjusting a data transmission rate in this embodiment of the present invention, in one aspect, first, frequency domain data borne by an occupied data bearer unit is buffered, and frequency domain data borne by an idle data bearer unit is discarded, and then, the buffered frequency domain data is transmitted at a lower transmission rate; in the other aspect, the frequency domain data borne by the occupied data bearer unit may be transmitted at a higher transmission rate. In this way, the data transmission rate is adaptively adjusted according to information for resource scheduling of a base station, which can decrease or increase the data transmission rate while keeping a system service running, so as to adapt to different data transmission conditions, thereby improving transmission performance of a system.

It should be understood that, in various embodiments of the present invention, serial numbers of the foregoing processes do not mean an execution sequence. The execution sequence of the processes should be determined according to functions and internal logic thereof, and should not be construed as any limitation on implementation processes of the embodiments of the present invention.

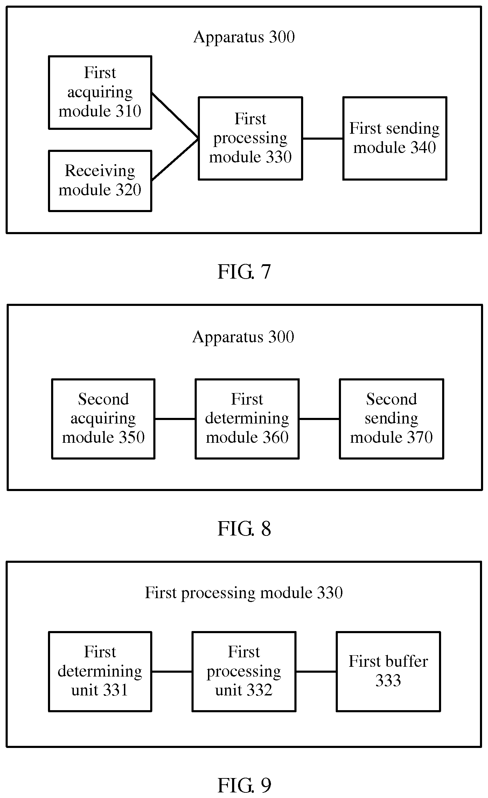

The foregoing describes in detail the method for adjusting a data transmission rate according to this embodiment of the present invention with reference to FIG. 1 to FIG. 6, and the following describes in detail the apparatus for adjusting a data transmission rate according to this embodiment of the present invention with reference to FIG. 7 to FIG. 13.

As shown in FIG. 7, an apparatus 300 for adjusting a data transmission rate according to an embodiment of the present invention includes:

a first acquiring module 310, configured to acquire information for resource scheduling that is determined by a base station according to information about resource quantity, where the information about resource quantity indicates a quantity of resources that can be scheduled by the base station; a receiving module 320, configured to receive first frequency domain data transmitted at a first transmission rate; a first processing module 330, configured to: according to the information for resource scheduling acquired by the first acquiring module 310, buffer first frequency domain data that is received by the receiving module 320 and is borne by an occupied data bearer unit, and discard first frequency domain data that is received by the receiving module 320 and is borne by an idle data bearer unit; and a first sending module 340, configured to transmit, at a second transmission rate, the first frequency domain data buffered by the first processing module 330, where the second transmission rate is lower than the first transmission rate.

Therefore, according to the apparatus for adjusting a data transmission rate in this embodiment of the present invention, first, frequency domain data borne by an occupied data bearer unit is buffered, and frequency domain data borne by an idle data bearer unit is discarded, and then, the buffered frequency domain data is transmitted at a lower transmission rate, which can avoid system service interruption caused by changing a data transmission rate by using a method for changing a spectral bandwidth setting of a system, such as deleting a cell, setting up a cell, and the like. In this way, the data transmission rate can be adjusted while a system service is kept running, so as to adapt to different data transmission conditions, thereby improving transmission performance of the system.

In this embodiment of the present invention, optionally, as shown in FIG. 8, the apparatus 300 may further include:

a second acquiring module 350, configured to acquire information about data transmission rate of a data transmission channel;
a first determining module 360, configured to determine, according to the information about data transmission rate acquired by the second acquiring module 350, the quantity of resources that can be scheduled by the base station; and
a second sending module 370, configured to send, to the base station, the information about resource quantity determined by the first determining module 360, where the information about resource quantity indicates the quantity of resources that can be scheduled by the base station.

Optionally, in this embodiment of the present invention, as shown in FIG. 9, the first processing module 330 includes:

a first determining unit 331, configured to determine, according to the information for resource scheduling, multiple data bearer units scheduled by the base station, and state information of each data bearer unit in the multiple data bearer units, where the state information includes an occupied state and an idle state;
a first processing unit 332, configured to: for each data bearer unit in the multiple data bearer units, when the state information of the data bearer unit is the occupied state, output first enabling information that indicates the occupied state, and when the state information of the data bearer unit is the idle state, output second enabling information that indicates the idle state; and
a first buffer 333, configured to buffer, according to the first enabling information, the first frequency domain data borne by the data bearer unit, and skipping buffering, according to the second enabling information, the first frequency domain data borne by the data bearer unit.

Optionally, in this embodiment of the present invention, the first determining unit 331 may be specifically configured to:

determine, according to the information for resource scheduling, multiple resource block RB resources scheduled by the base station, and state information of each RB resource in the multiple RB resources; and
determine, according to a correspondence between an RB resource and a data bearer unit, the multiple data bearer units scheduled by the base station, and the state information of each data bearer unit in the multiple data bearer units.

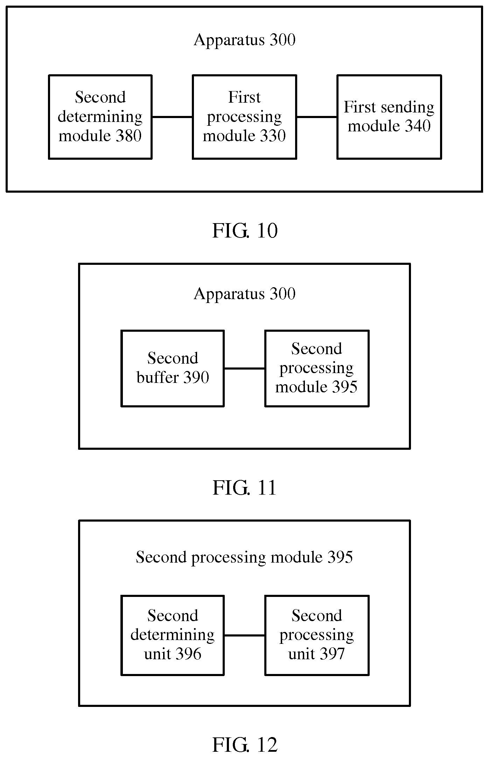

In this embodiment of the present invention, optionally, as shown in FIG. 10, the apparatus 300 may further include:

a second determining module 380, configured to: before the first sending module 340 transmits, at the second transmission rate, the buffered first frequency domain data, determine reference signal data included in received frequency domain data of downlink physical layer transmitted at the first transmission rate; where
the first processing module 330 is further configured to buffer the reference signal data determined by the second determining module 380.

In this embodiment of the present invention, optionally, as shown in FIG. 11, the apparatus 300 may further include:

a second buffer 390, configure to buffer second frequency domain data transmitted at the second transmission rate; and
a second processing module 395, configured to: according to the information for resource scheduling, control the second buffer 390 to read and transmit, at the first transmission rate, second frequency domain data borne by the occupied data bearer unit, and control the second buffer 390 to transmit, at the first transmission rate, all-zero data borne by the idle data bearer unit.

Optionally, in this embodiment of the present invention, as shown in FIG. 12, the second processing module 395 includes:

a second determining unit 396, configured to determine, according to the information for resource scheduling, multiple data bearer units scheduled by the base station, and state information of each data bearer unit in the multiple data bearer units, where the state information includes an occupied state and an idle state; and
a second processing unit 397, configured to: for each data bearer unit in the multiple data bearer units, when the state information of the data bearer unit is the occupied state, output first enabling information that indicates the occupied state, and when the state information of the data bearer unit is the idle state, output second enabling information that indicates the idle state; where
the second buffer 390 may be further configured to: read, according to the first enabling information, the second frequency domain data borne by the data bearer unit, and transmit, at the first transmission rate according to the first enabling information, the second frequency domain data borne by the data bearer unit; and transmit, at the first transmission rate according to the second enabling information, the all-zero data borne by the data bearer unit.

Optionally, in this embodiment of the present invention, the data bearer unit is a resource block RB.

Optionally, in this embodiment of the present invention, the receiving module 320 is specifically configured to:

receive uplink physical layer frequency domain data that is sent by a radio frequency transceiver at the first transmission rate; and
receive frequency domain data of downlink physical layer that is sent by a baseband processing unit at the first transmission rate.

It should be understood that, the apparatus 300 for adjusting a data transmission rate according to this embodiment of the present invention may be corresponding to an execution body of the method for adjusting a data transmission rate according to the embodiments of the present invention, and the foregoing and other operations and/or functions of the modules in the apparatus 300 are respectively used to implement corresponding procedures of methods in FIG. 1 to FIG. 6. For brevity, details are not described herein again.

Therefore, according to the apparatus for adjusting a data transmission rate in this embodiment of the present invention, in one aspect, first, frequency domain data borne by an occupied data bearer unit is buffered, and frequency domain data borne by an idle data bearer unit is discarded, and then, the buffered frequency domain data is transmitted at a lower transmission rate; in the other aspect, the frequency domain data borne by the occupied data bearer unit may be transmitted at a higher transmission rate. In this way, the data transmission rate is adaptively adjusted according to information for resource scheduling of a base station, which can decrease or increase the data transmission rate while keeping a system service running, so as to adapt to different data transmission conditions, thereby improving transmission performance of a system.

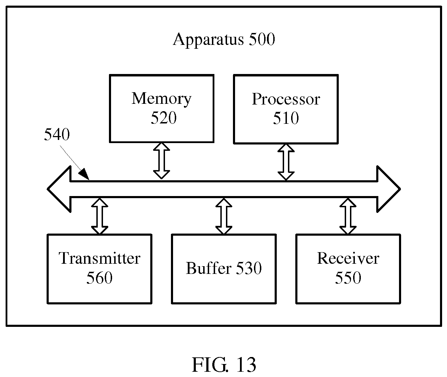

As shown in FIG. 13, an embodiment of the present invention further provides an apparatus 500 for adjusting a data transmission rate, where the apparatus 500 includes: a processor 510, a memory 520, a buffer 530, a bus system 540, a receiver 550, and a transmitter 560.

The processor 510, the memory 520, the buffer 530, the receiver 550, and the transmitter 560 are connected to each other by using the bus system 540, where the memory 520 is configured to store an instruction, and the processor 510 is configured to execute the instruction stored by the memory, so as to control the receiver 550 to receive a signal, control the transmitter 560 to send a signal, and control the buffer 530 to buffer data.

The processor 510 is configured to acquire information for resource scheduling that is determined by a base station according to information about resource quantity, where the information about resource quantity indicates a quantity of resources that can be scheduled by the base station.

The receiver 550 is configured to receive first frequency domain data transmitted at a first transmission rate.

The buffer 530 is configured to: according to information for resource scheduling, buffer first frequency domain data borne by an occupied data bearer unit, and discard first frequency domain data borne by an idle data bearer unit.

The transmitter 560 is configured to transmit, at a second transmission rate, the buffered first frequency domain data, where the second transmission rate is lower than the first transmission rate.

Therefore, according to the apparatus for adjusting a data transmission rate in this embodiment of the present invention, first, frequency domain data borne by an occupied data bearer unit is buffered, and frequency domain data borne by an idle data bearer unit is discarded, and then, the buffered frequency domain data is transmitted at a lower transmission rate, which can avoid system service interruption caused by changing a data transmission rate by using a method for changing a spectral bandwidth setting of a system, such as deleting a cell, setting up a cell, and the like. In this way, the data transmission rate can be adjusted while a system service is kept running, so as to adapt to different data transmission conditions, thereby improving transmission performance of the system.

It should be understood that in this embodiment of the present invention, the processor 510 may be a central processing unit (Central Processing Unit, "CPU" for short), or the processor 510 may be another general purpose processor, a digital signal processor (DSP), an application-specific integrated circuit (ASIC), a field programmable gate array (FPGA), or another programmable logical device, discrete gate or transistor logical device, discrete hardware component, or the like. The general purpose processor may be a microprocessor or the processor may be any conventional processor and the like.

The memory 520 may include a read-only memory and a random access memory, and provides an instruction and data for the processor 510. A part of the memory 520 may further include a non-volatile random access memory. For example, the memory 520 may further store device type information.

The bus system 540 may further include a power bus, a control bus, a status signal bus, and the like in addition to a data bus. However, for clear description, various types of buses in the figure are marked as the bus system 540.

In an implementation process, the steps in the foregoing methods may be completed by means of an integrated logic circuit of hardware in the processor 510 or an instruction in a form of software. Steps of the methods disclosed with reference to the embodiments of the present invention may be directly executed and completed by means of a hardware processor, or may be executed and completed by using a combination of hardware and software modules in the processor. The software module may be located in a mature storage medium in the field, such as a random access memory, a flash memory, a read-only memory, a programmable read-only memory, an electrically-erasable programmable memory, or a register. The storage medium is located in the memory 520, and the processor 510 reads information in the memory 520 and completes the steps in the foregoing methods in combination with hardware of the processor 510. To avoid repetition, details are not described herein again.

Optionally, in an embodiment, the processor 510 may be further configured to:

acquire information about data transmission rate of a data transmission channel; and
determine, according to the information about data transmission rate, the quantity of resources that can be scheduled by the base station; and
the transmitter 560 is further configured to: send the information about resource quantity to the base station, where the information about resource quantity indicates the quantity of resources that can be scheduled by the base station.

Optionally, in an embodiment, the processor 510 may be specifically configured to:

determine, according to the information for resource scheduling, multiple data bearer units scheduled by the base station, and state information of each data bearer unit in the multiple data bearer units, where the state information includes an occupied state and an idle state;
for each data bearer unit in the multiple data bearer units, when the state information of the data bearer unit is the occupied state, output first enabling information that indicates the occupied state, and control the buffer to buffer, according to the first enabling information, the first frequency domain data borne by the data bearer unit; and
for each data bearer unit in the multiple data bearer units, when the state information of the data bearer unit is the idle state, output second enabling information that indicates the idle state, and control the buffer skipping buffering, according to the second enabling information, the first frequency domain data borne by the data bearer unit.

Optionally, in an embodiment, that the processor 510 determines, according to the information for resource scheduling, multiple data bearer units scheduled by the base station, and state information of each data bearer unit in the multiple data bearer units includes:

determining, according to the information for resource scheduling, multiple resource block RB resources scheduled by the base station, and state information of each RB resource in the multiple RB resources; and
determining, according to a correspondence between an RB resource and a data bearer unit, the multiple data bearer units scheduled by the base station, and the state information of each data bearer unit in the multiple data bearer units.

Optionally, in an embodiment, before the transmitter 560 transmits, at the second transmission rate, the buffered first frequency domain data, the processor 510 is further configured to determine reference signal data included in received frequency domain data of downlink physical layer transmitted at the first transmission rate; and the buffer 530 is further configure to buffer the reference signal data.

Optionally, in an embodiment, the buffer 530 is further configured to buffer second frequency domain data transmitted at the second transmission rate; and the processor 510 may be further configured to:
according to the information for resource scheduling, control the buffer to read and transmit, at the first transmission rate, second frequency domain data borne by the occupied data bearer unit, and control the buffer to transmit, at the first transmission rate, all-zero data borne by the idle data bearer unit.

Optionally, in an embodiment, the processor 510 may be specifically configured to:

determine, according to the information for resource scheduling, multiple data bearer units scheduled by the base station, and state information of each data bearer unit in the multiple data bearer units, where the state information includes an occupied state and an idle state; and
for each data bearer unit in the multiple data bearer units, when the state information of the data bearer unit is the occupied state, output first enabling information that indicates the occupied state, and when the state information of the data bearer unit is the idle state, output second enabling information that indicates the idle state; and
the buffer 530 may be further configured to: read, according to the first enabling information, the second frequency domain data borne by the data bearer unit, and transmit, at the first transmission rate according to the first enabling information, the second frequency domain data borne by the data bearer unit; and transmit, at the first transmission rate according to the second enabling information, the all-zero data borne by the data bearer unit.

Optionally, in an embodiment, the data bearer unit is a resource block RB.
Optionally, in an embodiment, the receiver 550 may be specifically configured to:

> receive uplink physical layer frequency domain data that is sent by a radio frequency transceiver at the first transmission rate; and
> receive frequency domain data of downlink physical layer that is sent by a baseband processing unit at the first transmission rate.

It should be understood that, the apparatus 500 for adjusting a data transmission rate according to this embodiment of the present invention may be corresponding to an execution body of the method for adjusting a data transmission rate according to the embodiments of the present invention, or corresponding to the apparatus 300 for adjusting a data transmission rate according to the embodiments of the present invention, and the foregoing and other operations and/or functions of the modules in the apparatus 500 are respectively used to implement corresponding procedures of methods in FIG. 1 to FIG. 6. For brevity, details are not described herein again.

Therefore, according to the apparatus for adjusting a data transmission rate in this embodiment of the present invention, in one aspect, first, frequency domain data borne by an occupied data bearer unit is buffered, and frequency domain data borne by an idle data bearer unit is discarded, and then, the buffered frequency domain data is transmitted at a lower transmission rate; in the other aspect, the frequency domain data borne by the occupied data bearer unit may be transmitted at a higher transmission rate. In this way, the data transmission rate is adaptively adjusted according to information for resource scheduling of a base station, which can decrease or increase the data transmission rate while keeping a system service running, so as to adapt to different data transmission conditions, thereby improving transmission performance of a system.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that, in the embodiments of the present invention, "B that is corresponding to A" indicates that B is associated with A, and B may be determined according to A. However, it should further be understood that determining B according to A does not mean that B is determined only according to A, and B may also be determined according to A and/or other information.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The computer software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. An apparatus (500) for adjusting a data transmission rate, wherein the apparatus (500) comprising:

a processor (510), a memory (520), a buffer (530), a bus system (540), a receiver (550), and a transmitter (560); wherein the processor (510), the memory (520), the buffer (530), the receiver (550), and the transmitter (560) are connected to each other by using the bus system (540), wherein the memory (520) is configured to store an instruction, and the processor (510) is configured to execute the instruction stored by the memory (520), so as to control the receiver (550) to receive a signal, control the transmitter (560) to send a signal, and control the buffer (530) to buffer data; the processor (510) is configured to acquire information for resource scheduling that is determined by a base station according to information about resource quantity, wherein the information about resource quantity indicates a quantity of resources which the base station is able to schedule; the receiver (550) is configured to receive first frequency domain data transmitted at a first transmission rate; the buffer (530) is configured to: according to information for resource scheduling, buffer first frequency domain data borne by an occupied data bearer unit, and discard first frequency domain data borne by an idle data bearer unit; and the transmitter (560) is configured to transmit, at a second transmission rate, the buffered first frequency domain data, wherein the second transmission rate is lower than the first transmission rate,

**characterized in that** before the transmitter transmits, at the second transmission rate, the buffered first frequency domain data, the processor (510) is further configured to determine reference signal data comprised in received frequency domain data of downlink physical layer transmitted at the first transmission rate; and the buffer (530) is further configure to buffer the reference signal data.

2. The apparatus (500) according to claim 1, wherein the processor (510) is further configured to:

acquire information about data transmission rate of a data transmission channel; and determine, according to the information about data transmission rate, the quantity of resources which the base station is able to schedule; and the transmitter (560) is further configured to: send the information about resource quantity to the base station, wherein the information about resource quantity indicates the quantity of resources which the base station is able to schedule.

3. The apparatus (500) according to claim 1 or 2, wherein the processor (510) is specifically configured to:

determine, according to the information for resource scheduling, multiple data bearer units scheduled by the base station, and state information of each data bearer unit in the multiple data bearer units, wherein the state information comprises an occupied state and an idle state; for each data bearer unit in the multiple data bearer units, when the state information of the data bearer unit is the occupied state, output first enabling information that indicates the occupied state, and control the buffer (530) to buffer, according to the first enabling information, the first frequency domain data borne by the data bearer unit; and for each data bearer unit in the multiple data bearer units, when the state information of the data bearer unit is the idle state, output second enabling information that indicates the idle state, and control the buffer discarding, according to the second enabling information, the first frequency domain data borne by the data bearer unit.

4. The apparatus (500) according to claim 3, wherein that the processor (510) is specifically configured to:

determine, according to the information for resource scheduling, multiple resource block, RB, resources scheduled by the base station, and state information of each RB resource in the multiple RB resources; and

determine, according to a correspondence between an RB resource and a data bearer unit, the multiple data bearer units scheduled by the base station, and the state information of each data bearer unit in the multiple data bearer units.

5. The apparatus (500) according to any one of claims 1 to 4, wherein the buffer (530) is further configured to buffer second frequency domain data transmitted at the second transmission rate; and

the processor (510) is further configured to: according to the information for resource scheduling, control the buffer (530) to read and transmit, at the first transmission rate, second frequency domain data borne by the occupied data bearer unit, and control the buffer to transmit, at the first transmission rate, all-zero data borne by the idle data bearer unit.

6. The apparatus (500) according to claim 5, wherein the processor (510) is specifically configured to:

determine, according to the information for resource scheduling, multiple data bearer units scheduled by the base station, and state information of each data bearer unit in the multiple data bearer units, wherein the state information comprises an occupied state and an idle state; and

for each data bearer unit in the multiple data bearer units, when the state information of the data bearer unit is the occupied state, output first enabling information that indicates the occupied state, and when the state information of the data bearer unit is the idle state, output second enabling information that indicates the idle state; and the buffer is further configured to:

read, according to the first enabling information, the second frequency domain data borne by the data bearer unit, and transmit, at the first transmission rate according to the first enabling information, the second frequency domain data borne by the data bearer unit; and transmit, at the first transmission rate according to the second enabling information, the all-zero data borne by the data bearer unit.

7. A method for adjusting a data transmission rate, comprising:

acquiring (S110) information for resource scheduling that is determined by a base station according to information about resource quantity, wherein the information about resource quantity indicates a quantity of resources which the base station is able to schedule;
receiving (S120) first frequency domain data transmitted at a first transmission rate;
buffering (S130), according to the information for resource scheduling, first frequency domain data borne by an occupied data bearer unit, and discarding, according to the information for resource scheduling, first frequency domain data borne by an idle data bearer unit; and
transmitting (S140), at a second transmission rate, the buffered first frequency domain data, wherein the second transmission rate is lower than the first transmission rate, wherein before the transmitting (S140), at a second transmission rate, the buffered first frequency domain data, the method **characterized by**:

determining reference signal data comprised in received frequency domain data of downlink physical layer transmitted at the first transmission rate; and
buffering the reference signal data.

8. The method according to claim 7, wherein before the acquiring (S110) information for resource scheduling that is determined by a base station according to information about resource quantity, the method further comprises:

acquiring (S150) information about data transmission rate of a data transmission channel;
determining (S160), according to the information about data transmission rate, the quantity of resources which the base station is able to schedule; and
sending (S170) the information about resource quantity to the base station, wherein the information about resource quantity indicates the quantity of resources which the base station is able to schedule.

9. The method according to claim 7 or claim 8, wherein the buffering (S130), according to the information for resource scheduling, first frequency domain data borne by an occupied data bearer unit, and discarding, according to the information for resource scheduling, first frequency domain data borne by an idle data bearer unit comprises:

determining (S131), according to the information for resource scheduling, multiple data bearer units scheduled by the base station, and state information of each data bearer unit in the multiple data bearer units, wherein the state information comprises an occupied state and an idle state;
for each data bearer unit in the multiple data bearer units, when the state information of the data bearer unit is the occupied state, outputting (S132) first enabling information that indicates the occupied state, and controlling a first buffer to buffer, according to the first enabling information, the first frequency domain data borne by the data bearer unit; and

for each data bearer unit in the multiple data bearer units, when the state information of the data bearer unit is the idle state, outputting (S133) second enabling information that indicates the idle state, and controlling the first buffer discarding, according to the second enabling information, the first frequency domain data borne by the data bearer unit.

10. The method according to claim 9, wherein the determining (S131), according to the information for resource scheduling, multiple data bearer units scheduled by the base station, and state information of each data bearer unit in the multiple data bearer units comprises:

determining, according to the information for resource scheduling, multiple resource block, RB, resources scheduled by the base station, and state information of each RB resource in the multiple RB resources; and

determining, according to a correspondence between an RB resource and a data bearer unit, the multiple data bearer units scheduled by the base station, and the state information of each data bearer unit in the multiple data bearer units.

11. The method according to any one of claims 7 to 10, wherein the method further comprises:

buffering (S180), in a second buffer, second frequency domain data transmitted at the second transmission rate; and

reading (S190), from the second buffer at the first transmission rate according to the information for resource scheduling, second frequency domain data borne by the occupied data bearer unit and transmitting, at the first transmission rate according to the information for resource scheduling, the second frequency domain data borne by the occupied data bearer unit; and transmitting, at the first transmission rate according to the information for resource scheduling, all-zero data borne by the idle data bearer unit.

12. The method according to claim 11, wherein the reading (S190), from the second buffer at the first transmission rate according to the information for resource scheduling, second frequency domain data borne by the occupied data bearer unit and transmitting, at the first transmission rate according to the information for resource scheduling, the second frequency domain data borne by the occupied data bearer unit; and transmitting, at the first transmission rate according to the information for resource scheduling, all-zero data borne by the idle data bearer unit comprises:

determining (S191), according to the information for resource scheduling, multiple data bearer units scheduled by the base station, and state information of each data bearer unit in the multiple data bearer units, wherein the state information comprises an occupied state and an idle state;

for each data bearer unit in the multiple data bearer units, when the state information of the data bearer unit is the occupied state, outputting (S192) first enabling information that indicates the occupied state, and controlling the second buffer to read and transmit, at the first transmission rate according to the first enabling information, the second frequency domain data borne by the data bearer unit; and

for each data bearer unit in the multiple data bearer units, when the state information of the data bearer unit is the idle state, outputting (S193) second enabling information that indicates the idle state, and controlling the second buffer to transmit, at the first transmission rate according to the second enabling information, the all-zero data borne by the data bearer unit.

13. The method according to any one of claims 7 to 12, wherein the data bearer unit is a RB.

## Patentansprüche

1. Gerät (500) zum Anpassen einer Datenübertragungs-Rate, wobei das Gerät (500) umfasst:

einen Prozessor (510), einen Speicher (520), einen Puffer (530), ein Bussystem (540), einen Empfänger (550) und einen Sender (560); wobei der Prozessor (510), der Speicher (520), der Puffer (530), der Empfänger (550) und der Sender (560) durch Verwenden des Bussystems (540) aneinander angeschlossen sind, wobei der Speicher (520) ausgelegt ist, um eine Anweisung zu speichern, und der Prozessor (510) ausgelegt ist, um die vom Speicher (520) gespeicherte Anweisung derart auszuführen, dass der Empfänger (550) zum Empfangen eines Signals gesteuert ist, der Sender (560) zum Senden eines Signals gesteuert ist und der Puffer (530) zum Puffern von Daten gesteuert ist;

der Prozessor (510) ausgelegt ist, um Informationen zur Ressourcenplanung zu erwerben, die durch eine Basisstation gemäß Informationen über eine Ressourcenmenge bestimmt sind, wobei die Informationen über die Ressourcenmenge eine Menge von Ressourcen anzeigt, zu deren Steuerung die Basisstation in der Lage ist; der Empfänger (550) ausgelegt ist, um erste Frequenzdomänen-Daten zu empfangen, die zu einer ersten Übertragungsrate übertragen sind;

der Puffer (530) ausgelegt ist, um: gemäß den Informationen zur Ressourcenplanung erste Frequenzdomänen-Daten zu puffern, die von einer belegten Datenträger-Einheit getragen sind, und erste Frequenzdomänen-Daten zu verwerfen, die von einer Datenträger-Einheit im Leerlauf getragen sind; und

der Sender (560) ausgelegt ist, um zu einer zweiten Übertragungsrate die gepufferten ersten Frequenzdomänen-Daten zu übertragen, wobei die zweite Übertragungsrate niedriger ist als die erste Übertragungsrate,

**dadurch gekennzeichnet, dass** der Prozessor (510) weiterhin ausgelegt ist, um die Referenzsignal-Daten zu bestimmen, die in den empfangenen Frequenzdomänen-Daten der physischen Downlink-Schicht umfasst sind, die zu der ersten Übertragungsrate übertragen sind, bevor der Sender die gepufferten ersten Frequenzdomänen-Daten zur zweiten Übertragungsrate überträgt; und der Puffer (530) weiterhin ausgelegt ist, um die Referenzsignaldaten zu puffern.

2. Gerät (500) nach Anspruch 1, wobei der Prozessor (510) weiter ausgelegt ist, um:

   Informationen über eine Datenübertragungs-Rate eines Datenübertragungs-Kanals zu erwerben; und
   gemäß den Informationen über die Datenübertragungs-Rate die Menge der Ressourcen zu bestimmen, zu deren Planung die Basisstation in der Lage ist; und
   der Sender (560) weiterhin ausgelegt ist, um: die Informationen über die Ressourcenmenge an die Basisstation zu senden, wobei die Informationen über die Ressourcenmenge die Menge an Ressourcen anzeigt, zu deren Planung die Basisstation in der Lage ist.

3. Gerät (500) nach Anspruch 1 oder 2, wobei der Prozessor (510) spezifisch konfiguriert ist, um:

   gemäß den Informationen zur Ressourcenplanung zahlreiche Datenträger-Einheiten von der Basisstation und Zustandsinformationen jeder Datenträger-Einheit in den zahlreichen Datenträger-Einheiten zu bestimmen, wobei die Zustandsinformationen einen belegten Zustand und einen Zustand im Leerlauf umfassen; für jede Datenträger-Einheit in den zahlreichen Datenträger-Einheiten erste Aktivierungsinformationen auszugeben, die den belegten Zustand anzeigen, wenn die Zustandsinformationen der Datenträgereinheit im belegten Zustand sind, und den Puffer (530) steuern, um gemäß der ersten Aktivierungsinformation die ersten Frequenzdomänen-Daten zu puffern, die von der Datenträger-Einheit getragen sind; und für jede Datenträger-Einheit in den zahlreichen Datenträger-Einheiten zweite Aktivierungsinformationen auszugeben, die den Leerlauf-Zustand anzeigen, wenn die Zustandsinformationen der Datenträger-Einheit im Leerlauf-Zustand sind, und den Puffer zu steuern, der gemäß den zweiten Aktivierungsinformationen die ersten Frequenzdomänen-Daten verwerfen, die von der Datenträgereinheit getragen sind.

4. Gerät (500) nach Anspruch 3, wobei der Prozessor (510) spezifisch ausgelegt ist, um:

   gemäß den Informationen für die Ressourcenplanung zahlreiche Ressourcenblöcke RB, von der Basisstation geplante Ressourcen und Zustandsinformationen jeder RB-Ressource in den zahlreichen RB-Ressourcen zu bestimmen; und
   gemäß einer Entsprechung zwischen einer RB-Ressource und einer Datenträger-Einheit die zahlreichen Datenträger-Einheiten, die von der Basisstation geplant sind und die Zustandsinformationen jeder Datenträger-Einheit in den zahlreichen Datenträger-Einheiten zu bestimmen.

5. Gerät (500) nach irgendeinem der Ansprüche 1 bis 4, wobei der Puffer (530) weiterhin ausgelegt ist, um zweite Frequenzdomänen-Daten zu puffern, die zu der zweiten Übertragungsrate übertragen sind; und der Prozessor (510) weiterhin ausgelegt ist, um: gemäß den Informationen zur Ressourcenplanung den Puffer (530) zum Lesen und Senden von zweiten Frequenzdomänen-Daten, die von der belegten Datenträger-Einheit getragen sind, zur ersten Übertragungsrate zu steuern, und den Puffer zum Übertragen aller Null-Daten, die von der Datenträger-Einheit im Leerlauf getragen sind, zu einer ersten Übertragungsrate zu steuern.

6. Gerät (500) nach Anspruch 5, wobei der Prozessor (510) spezifisch ausgelegt ist, um:

   gemäß den Informationen zur Ressourcenplanung zahlreiche Datenträger-Einheiten, die von der Basisstation geplant sind, und Zustands-Informationen jeder Datenträger-Einheit in den zahlreichen Datenträger-Einheiten zu bestimmen, wobei die Zustandsinformationen einen belegten Zustand und einen Leerlauf-Zustand umfassen; und

für jede Datenträger-Einheit in den zahlreichen Datenträger-Einheiten erste Aktivierungsinformationen ausgeben, die den belegten Zustand angeben, wenn die Zustandsinformationen der Datenträger-Einheit der belegte Zustand sind, und wenn die Zustandsinformationen der Datenträgereinheit im Leerlauf-Zustand sind, zweite Aktivierungsinformationen ausgeben, die den Leerlauf-Zustand anzeigen; und

der Puffer weiterhin ausgelegt ist, um:

gemäß den ersten Aktivierungsinformationen die zweiten Frequenzdomänen-Daten, die von der Datenträger-Einheit getragen sind, zu lesen und die zweiten Frequenzdomänen-Daten, die von der Datenträger-Einheit getragen sind, zur ersten Übertragungsrate gemäß den ersten Aktivierungsinformationen zu übertragen; und

alle Null-Daten, die von der Datenträger-Einheit getragen sind, zur ersten Übertragungsrate gemäß den zweiten Aktivierungsinformationen zu senden.

7. Verfahren zum Anpassen einer Datenübertragungs-Rate, umfassend:

Erwerben (S110) von Informationen zur Ressourcenplanung, die von einer Basisstation gemäß Informationen über die Ressourcenqualität bestimmt sind, wobei die Informationen über die Ressourcenmenge eine Menge an Ressourcen anzeigt, zu deren Planung die Basisstation in der Lage ist;
Empfangen (S120) von ersten Frequenzdomänen-Daten, die zu einer ersten Übertragungsrate gesendet sind;
Puffern (S130) von ersten Frequenzdomänen-Daten, die von einer belegten Datenträger-Einheit getragen sind, gemäß den Informationen zur Ressourcenplanung und Verwerfen von ersten Frequenzdomänen-Daten, die von einer Datenträger-Einheit im Leerlauf getragen sind, gemäß den Informationen zur Ressourcenplanung; und
Übertragen (S140) der gepufferten ersten Frequenzdomänen-Daten zu einer zweiten Übertragungsrate, wobei die zweite Übertragungsrate niedriger ist als die erste Übertragungsrate, wobei vor dem Übertragen (S140) der gepufferten ersten Frequenzdomänen-Daten zu einer zweiten Übertragungsrate das Verfahren **ge-**

**kennzeichnet ist durch**:

Bestimmen von Referenzsignal-Daten, die in empfangenen Frequenzdomänen-Daten der physischen Downlink-Schicht umfasst sind, die zur ersten Übertragungsrate gesendet sind; und
Puffern der Referenzsignal-Daten.

8. Verfahren nach Anspruch 7, wobei das Verfahren vor dem Erwerben (S110) von Informationen zur Ressourcenplanung, die durch eine Basisstation gemäß Informationen über die Ressourcenmenge bestimmt ist, weiterhin umfasst:

Erwerben (S150) von Informationen über eine Datenübertragungs-Rate eines Datenübertragungs-Kanals;
Bestimmen (S160) der Menge an Ressource, zu deren Planung die Basisstation in der Lage ist, gemäß den Informationen über die Datenübertragungs-Rate; und
Senden (S170) der Informationen über die Ressourcenmenge an die Basisstation, wobei die Informationen über die Ressourcenmenge die Menge an Ressourcen angibt, zu deren Planung die Basisstation in der Lage ist.

9. Verfahren nach Anspruch 7 oder Anspruch 8, wobei das Puffern (S130) gemäß den Informationen zur Ressourcenplanung von ersten Frequenzdomänen-Daten, die von einer belegten Dateneinheit getragen sind, und das Verwerfen gemäß den Informationen zur Ressourcenplanung von ersten Frequenzdomänen-Daten, die von einer Datenträger-Einheit im Leerlauf getragen sind, umfasst:

Bestimmen (S131) gemäß den Informationen zur Ressourcenplanung von zahlreichen Datenträger-Einheiten, die durch die Basisstation bestimmt sind, und Zustandsinformationen jeder Datenträgereinheit in den zahlreichen Datenträger-Einheiten, wobei die Zustandsinformationen einen belegten Zustand und einen Leerlauf-Zustand umfassen;
für jede Datenträger-Einheit in den zahlreichen Datenträger-Einheiten Ausgeben (S132) von ersten Aktivierungsinformationen, die den belegten Zustand ermöglichen, wenn die Zustandsinformationen der Datenträger-Einheit der belegte Zustand ist, und Steuern eines ersten Puffers zum Puffern der ersten Frequenzdomänen-Daten, die von der Datenträger-Einheit getragen sind, gemäß den ersten Aktivierungsinformationen; und
für jede Datenträgereinheit in den zahlreichen Datenträger-Einheiten, Ausgeben (S133) von zweiten Aktivierungsinformationen, die den Leerlauf-Zustand angeben, wenn die Zustandsinformationen der Datenträger-Einheit der Leerlauf-Zustand sind, und Steuern des ersten Puffers, der gemäß den zweiten Aktivierungsinformationen die ersten Frequenzdomänen-Daten verwirft, die von der Datenträger-Einheit getragen sind.

10. Verfahren nach Anspruch 9, wobei das Bestimmen (S131) gemäß den Informationen zur Ressourcenplanung von zahlreichen Datenträger-Einheiten, die von der Basisstation geplant sind, und Zustandsinformationen jeder Datenträger-Einheit in den zahlreichen Datenträger-Einheiten umfassen:

Bestimmen, gemäß den Informationen zur Ressourcenplanung, von zahlreichen Ressourcenblöcken RB, von der Basisstation geplanten Ressourcen und Zustandsinformationen für jede RB-Ressource in den zahlreichen RB-Ressourcen; und
Bestimmen, gemäß einer Entsprechung zwischen einer RB-Ressource und einer Datenträger-Einheit der zahlreichen Datenträger-Einheiten, die von der Basisstation geplant sind, und der Zustandsinformationen jeder Datenträger-Einheit in den zahlreichen Datenträger-Einheiten.

11. Verfahren nach irgendeinem der Ansprüche 7 bis 10, wobei das Verfahren ferner umfasst:

Puffern (S180) von zweiten Frequenzdomänen-Daten in einem zweiten Puffer, die zur zweiten Übertragungsrate übertragen sind; und
Lesen (S190) von zweiten Frequenzdomänen-Daten, die von der belegten Datenträgereinheit getragen sind, von dem zweiten Puffer zur ersten Übertragungsrate gemäß den Informationen zur Ressourcenplanung, und Übertragen der zweiten Frequenzdomänen-Daten, die von der belegten Datenträger-Einheit getragen sind, zur ersten Übertragungsrate gemäß den Informationen zur Ressourcenplanung; und
Übertragen aller Null-Daten, die von der Datenträger-Einheit im Leerlauf getragen ist, zur ersten Übertragungsrate gemäß den Informationen zur Ressourcenplanung.

12. Verfahren nach Anspruch 11, wobei das Lesen (S190) von den zweiten Frequenzdomänen-Daten, die von der belegten Datenträger-Einheit getragen sind, von dem zweiten Puffer zur ersten Übertragungsrate gemäß den Informationen zur Ressourcenplanung und das Übertragen der zweiten Frequenzdomänen-Daten, die von der belegten Datenträger-Einheit getragen sind, zur ersten Übertragungsrate gemäß den Informationen zur Ressourcenplanung und das Übertragen aller Null-Daten, die von der Datenträger-Einheit im Leerlauf getragen sind, zur ersten Übertragungsrate gemäß den Informationen zur Ressourcenplanung, umfasst:

Bestimmen (S191), gemäß der Informationen zur Ressourcenplanung, von zahlreichen Datenträger-Einheiten, die von der Basisstation geplant sind, und Zustandsinformationen jeder Datenträger-Einheit in den zahlreichen Datenträger-Einheiten, wobei die Zustandsinformationen einen belegten Zustand und einen Leerlauf-Zustand umfassen;
für jede Datenträger-Einheit in den zahlreichen Datenträger-Einheiten Ausgeben (S192) von ersten Aktivierungsinformationen, die den belegten Zustand anzeigen, wenn die Zustandsinformationen der Datenträger-Einheit im belegten Zustand sind, und Steuern des zweiten Puffers zum Lesen und Übertragen der zweiten Frequenzdomänen-Daten, die von der Datenträgereinheit getragen sind, zur ersten Übertragungsrate gemäß den ersten Aktivierungsinformationen; und
für jede Datenträger-Einheit in den zahlreichen Datenträger-Einheiten Ausgeben (S193) von zweiten Aktivierungsinformationen, die den Leerlauf-Zustand anzeigen, wenn die Zustandsinformationen der Datenträger-Einheit der Leerlauf-Zustand ist, und Steuern des zweiten Puffers zum Übertragen aller Null-Daten, die von der Datenträger-Einheit getragen sind, zur ersten Übertragungsrate gemäß der zweiten Aktivierungsinformationen.

13. Verfahren nach irgendeinem der Ansprüche 7 bis 12, wobei die Datenträger-Einheit ein RB ist.

## Revendications

1. Appareil (500) pour régler une vitesse de transmission de données, l'appareil (500) comprenant :

un processeur (510), une mémoire (520), une mémoire tampon (530), un système de bus (540), un récepteur (550) et un émetteur (560) ; dans lequel
le processeur (510), la mémoire (520), la mémoire tampon (530), le récepteur (550) et l'émetteur (560) sont raccordés les uns aux autres en utilisant le système de bus (540), dans lequel la mémoire (520) est configurée pour stocker une instruction et le processeur (510) est configuré pour exécuter l'instruction stockée par la mémoire (520) de sorte à commander le récepteur (550) pour recevoir un signal, à commander l'émetteur (560) pour envoyer un signal et à commander la mémoire tampon (530) pour mettre en mémoire tampon des données ;

le processeur (510) est configuré pour acquérir des informations de planification de ressources qui sont déterminées par une station de base en fonction d'informations concernant une quantité de ressources, dans lequel les informations concernant une quantité de ressources indiquent une quantité de ressources que la station de base est capable de planifier ;

le récepteur (550) est configuré pour recevoir des premières données de domaine fréquentiel transmises à une première vitesse de transmission ;

la mémoire tampon (530) est configurée : en fonction d'informations de planification de ressources, pour mettre en mémoire tampon des premières données de domaine fréquentiel supportées par une unité de support de données occupée, et pour supprimer des premières données de domaine fréquentiel supportées par une unité de support de données inactive ; et

l'émetteur (560) est configuré pour transmettre, à une seconde vitesse de transmission, les premières données de domaine fréquentiel mises en mémoire tampon, dans lequel la seconde vitesse de transmission est inférieure à la première vitesse de transmission,

**caractérisé en ce que**, avant que l'émetteur ne transmette, à la seconde vitesse de transmission, les premières données de domaine fréquentiel mises en mémoire tampon, le processeur (510) est en outre configuré pour déterminer des données de signal de référence comprises dans des données de domaine fréquentiel reçues de couche physique de liaison descendante transmises à la première vitesse de transmission ; et la mémoire tampon (530) est en outre configurée pour mettre en mémoire tampon les données de signal de référence.

2. Appareil (500) selon la revendication 1, dans lequel le processeur (510) est en outre configuré :

pour acquérir des informations concernant une vitesse de transmission de données d'un canal de transmission de données ; et

pour déterminer, en fonction des informations concernant une vitesse de transmission de données, la quantité de ressources que la station de base est capable de planifier ; et

l'émetteur (560) est en outre configuré :

pour envoyer les informations concernant une quantité de ressources à la station de base, dans lequel les informations concernant une quantité de ressources indiquent la quantité de ressources que la station de base est capable de planifier.

3. Appareil (500) selon la revendication 1 ou 2, dans lequel le processeur (510) est spécialement configuré :

pour déterminer, en fonction des informations de planification de ressources, de multiples unités de support de données planifiées par la station de base et des informations d'état de chaque unité de support de données dans les multiples unités de support de données, dans lequel les informations d'état comprennent un état occupé et un état inactif ;

pour chaque unité de support de données dans les multiples unités de support de données, lorsque les informations d'état de l'unité de support de données sont l'état occupé, pour produire en sortie des premières informations d'activation qui indiquent l'état occupé, et pour commander la mémoire tampon (530) pour mettre en mémoire tampon, en fonction des premières informations d'activation, les premières données de domaine fréquentiel supportées par l'unité de support de données ; et

pour chaque unité de support de données dans les multiples unités de support de données, lorsque les informations d'état de l'unité de support de données sont l'état inactif, pour produire en sortie des secondes informations d'activation qui indiquent l'état inactif, et pour commander la mémoire tampon qui supprime, en fonction des secondes informations d'activation, les premières données de domaine fréquentiel supportées par l'unité de support de données.

4. Appareil (500) selon la revendication 3, dans lequel le processeur (510) est spécialement configuré :

pour déterminer, en fonction des informations de planification de ressources, de multiples ressources de bloc de ressources (RB) planifiées par la station de base et des informations d'état de chaque ressource de bloc RB dans les multiples ressources de bloc RB ; et

pour déterminer, en fonction d'une correspondance entre une ressource de bloc RB et une unité de support de données, les multiples unités de support de données planifiées par la station de base et les informations d'état de chaque unité de support de données dans les multiples unités de support de données.

5. Appareil (500) selon l'une quelconque des revendications 1 à 4, dans lequel la mémoire tampon (530) est en outre configurée pour mettre en mémoire tampon des secondes données de domaine fréquentiel transmises à la seconde vitesse de transmission ; et le processeur (510) est en outre configuré :

en fonction des informations de planification de ressources, pour commander la mémoire tampon (530) pour lire et transmettre, à la première vitesse de transmission, des secondes données de domaine fréquentiel supportées par l'unité de support de données occupée et pour commander la mémoire tampon pour transmettre, à la première vitesse de transmission, des données toutes à zéro supportées par l'unité de support de données inactive.

6. Appareil (500) selon la revendication 5, dans lequel le processeur (510) est spécialement configuré :

pour déterminer, en fonction des informations de planification de ressources, de multiples unités de support de données planifiées par la station de base et des informations d'état de chaque unité de support de données dans les multiples unités de support de données, dans lequel les informations d'état comprennent un état occupé et un état inactif ; et

pour chaque unité de support de données dans les multiples unités de support de données, lorsque les informations d'état de l'unité de support de données sont l'état occupé, pour produire en sortie des premières informations d'activation qui indiquent l'état occupé,

et lorsque les informations d'état de l'unité de support de données sont l'état inactif, pour produire en sortie des secondes informations d'activation qui indiquent l'état inactif ; et

la mémoire tampon est en outre configurée :

pour lire, en fonction des premières informations d'activation, les secondes données de domaine fréquentiel supportées par l'unité de support de données et pour transmettre, à la première vitesse de transmission en fonction des premières informations d'activation, les secondes données de domaine fréquentiel supportées par l'unité de support de données ; et pour transmettre, à la première vitesse de transmission en fonction des secondes informations d'activation, les données toutes à zéro supportées par l'unité de support de données.

7. Procédé pour régler une vitesse de transmission de données, consistant :

à acquérir (S110) des informations de planification de ressources qui sont déterminées par une station de base en fonction d'informations concernant une quantité de ressources, dans lequel les informations concernant une quantité de ressources indiquent une quantité de ressources que la station de base est capable de planifier ;

à recevoir (S 120) des premières données de domaine fréquentiel transmises à une première vitesse de transmission ;

à mettre en mémoire tampon (S 130), en fonction des informations de planification de ressources, des premières données de domaine fréquentiel supportées par une unité de support de données occupée, et à supprimer, en fonction des informations de planification de ressources, des premières données de domaine fréquentiel supportées par une unité de support de données inactive ; et

à transmettre (S140), à une seconde vitesse de transmission, les premières données de domaine fréquentiel mises en mémoire tampon, dans lequel la seconde vitesse de transmission est inférieure à la première vitesse de transmission, dans lequel, avant la transmission (S140), à une seconde vitesse de transmission, des premières données de domaine fréquentiel mises en mémoire tampon, le procédé étant **caractérisé en ce qu'**il consiste :

à déterminer des données de signal de référence comprises dans des données de domaine fréquentiel reçues de couche physique de liaison descendante transmises à la première vitesse de transmission ; et

à mettre en mémoire tampon les données de signal de référence.

8. Procédé selon la revendication 7, avant l'acquisition (S110) d'informations de planification de ressources qui sont déterminées par une station de base en fonction d'informations concernant une quantité de ressources, le procédé consistant en outre :

à acquérir (S150) des informations concernant une vitesse de transmission de données d'un canal de transmission de données ;

à déterminer (S160), en fonction des informations concernant une vitesse de transmission de données, la quantité de ressources que la station de base est capable de planifier ; et

à envoyer (S170) les informations concernant une quantité de ressources à la station de base, dans lequel les informations concernant une quantité de ressources indiquent la quantité de ressources que la station de base est capable de planifier.

9. Procédé selon la revendication 7 ou la revendication 8, dans lequel la mise en mémoire tampon (S130), en fonction des informations de planification de ressources, de premières données de domaine fréquentiel supportées par une unité de support de données occupée, et la suppression, en fonction des informations de planification de ressources, de premières données de domaine fréquentiel supportées par une unité de support de données inactive, consistent :

à déterminer (S131), en fonction des informations de planification de ressources, de multiples unités de support de données planifiées par la station de base et des informations d'état de chaque unité de support de données dans les multiples unités de support de données, dans lequel les informations d'état comprennent un état occupé et un état inactif ;

pour chaque unité de support de données dans les multiples unités de support de données, lorsque les informations d'état de l'unité de support de données sont l'état occupé, à produire en sortie (S132) des premières informations d'activation qui indiquent l'état occupé, et à commander une première mémoire tampon pour mettre en mémoire tampon, en fonction des premières informations d'activation, les premières données de domaine fréquentiel supportées par l'unité de support de données ; et

pour chaque unité de support de données dans les multiples unités de support de données, lorsque les informations d'état de l'unité de support de données sont l'état inactif, à produire en sortie (S133) des secondes informations d'activation qui indiquent l'état inactif, et à commander la première mémoire tampon qui supprime, en fonction des secondes informations d'activation, les premières données de domaine fréquentiel supportées par l'unité de support de données.

10. Procédé selon la revendication 9, dans lequel la détermination (S131), en fonction des informations de planification de ressources, de multiples unités de support de données planifiées par la station de base et d'informations d'état de chaque unité de support de données dans les multiples unités de support de données, consiste :

à déterminer, en fonction des informations de planification de ressources, de multiples ressources de bloc de ressources (RB) planifiées par la station de base et des informations d'état de chaque ressource de bloc RB dans les multiples ressources de bloc RB ; et

à déterminer, en fonction d'une correspondance entre une ressource de bloc RB et une unité de support de données, les multiples unités de support de données planifiées par la station de base et les informations d'état de chaque unité de support de données dans les multiples unités de support de données.

11. Procédé selon l'une quelconque des revendications 7 à 10, le procédé consistant en outre :

à mettre en mémoire tampon (S180), dans une seconde mémoire tampon, des secondes données de domaine fréquentiel transmises à la seconde vitesse de transmission ; et

à lire (S190), à partir de la seconde mémoire tampon, à la première vitesse de transmission en fonction des informations de planification de ressources, des secondes données de domaine fréquentiel supportées par l'unité de support de données occupée, et

à transmettre, à la première vitesse de transmission en fonction des informations de planification de ressources, les secondes données de domaine fréquentiel supportées par l'unité de support de données occupée ; et

à transmettre, à la première vitesse de transmission en fonction des informations de planification de ressources, des données toutes à zéro supportées par l'unité de support de données inactive.

12. Procédé selon la revendication 11, dans lequel la lecture (S190), à partir de la seconde mémoire tampon, à la première vitesse de transmission en fonction des informations de planification de ressources, de secondes données de domaine fréquentiel supportées par l'unité de support de données occupée et la transmission, à la première vitesse de transmission en fonction des informations de planification de ressources, des secondes données de domaine fréquentiel supportées par l'unité de support de données occupée ; et la transmission, à la première vitesse de transmission en fonction des informations de planification de ressources, de données toutes à zéro supportées par l'unité de support de données inactive consistent :

à déterminer (S191), en fonction des informations de planification de ressources, de multiples unités de support de données planifiées par la station de base et des informations d'état de chaque unité de support de données dans les multiples unités de support de données, dans lequel les informations d'état comprennent un état occupé et un état inactif ;

pour chaque unité de support de données dans les multiples unités de support de données, lorsque les informations d'état de l'unité de support de données sont l'état occupé, à produire en sortie (S192) des premières informations d'activation qui indiquent l'état occupé, et à commander la seconde mémoire tampon pour lire et transmettre, à la première vitesse de transmission en fonction des premières informations d'activation, les secondes données de domaine fréquentiel supportées par l'unité de support de données ; et

pour chaque unité de support de données dans les multiples unités de support de données, lorsque les informations d'état de l'unité de support de données sont l'état inactif, à produire en sortie (S193) des secondes informations d'activation qui indiquent l'état inactif, et à commander la seconde mémoire tampon pour transmettre, à la première vitesse de transmission en fonction des secondes informations d'activation, les données toutes à zéro supportées par l'unité de support de données.

13. Procédé selon l'une quelconque des revendications 7 à 12, dans lequel l'unité de support de données est un bloc RB.

```
Baseband processing unit → First rate adjustment apparatus → Data transmission channel → Second rate adjustment apparatus → IFFT → Radio frequency transceiver

Radio frequency transceiver → FFT → First rate adjustment apparatus → Data transmission channel → Second rate adjustment apparatus → Baseband processing unit
```

FIG. 1

100

| Acquire information for resource scheduling , where the information for resource scheduling is determined by a base station according to information about resource quantity, and the information about resource quantity indicates a quantity of resources that can be scheduled by the base station | S110 |

| Receive first frequency domain data transmitted at a first transmission rate | S120 |

| According to the information for resource scheduling , buffer first frequency domain data beared by an occupied data bearer unit, and discard first frequency domain data beared by an idle data bearer unit | S130 |

| Transmit, at a second transmission rate, the buffered first frequency domain data, where the second transmission rate is lower than the first transmission rate | S140 |

FIG. 2

100

| Acquire information about data transmission rate of a data transmission channel | S150 |

| Determine, according to the information about data transmission rate, a quantity of resources that can be scheduled by a base station | S160 |

| Send the information about resource quantity to the base station, where the information about resource quantity indicates the quantity of resources that can be scheduled by the base station | S170 |

FIG. 3

130

| Determine, according to information for resource scheduling, multiple data bearer units scheduled by a base station, and state information of each data bearer unit in the multiple data bearer units, where the state information includes an occupied state and an idle state | S131 |

| For each data bearer unit in the multiple data bearer units, when the state information of the data bearer unit is the occupied state, output first enabling information that indicates the occupied state, and control a first buffer to buffer, according to the first enabling information, first frequency domain data borne by the data bearer unit | S132 |

| For each data bearer unit in the multiple data bearer units, when the state information of the data bearer unit is the idle state, output second enabling information that indicates the idle state, and control the first buffer not to buffer, according to the second enabling information, first frequency domain data borne by the data bearer unit | S133 |

FIG. 4

100

| Buffer, in a second buffer, second frequency domain data transmitted at a second transmission rate | ∿ S180 |

| Read, from the second buffer at a first transmission rate according to information for resource scheduling , second frequency domain data carried by an occupied data bearer unit and transmit, at the first transmission rate according to the resource scheduling information, the second frequency domain data borne by the occupied data bearer unit, and transmit, at the first transmission rate according to the information for resource scheduling, all-zero data borne by an idle data bearer unit | ∿ S190 |

FIG. 5

190

| Determine, according to information for resource scheduling , multiple data bearer units scheduled by a base station, and state information of each data bearer unit in the multiple data bearer units, where the state information includes an occupied state and an idle state | ∿ S191 |

| For each data bearer unit in the multiple data bearer units, when the state information of the data bearer unit is the occupied state, output first enabling information that indicates the occupied state, and control a second buffer to read and transmit, at a first transmission rate according to the first enabling information, second frequency domain data borne by the data bearer unit | ∿ S192 |

| For each data bearer unit in the multiple data carrier units, when the state information of the data bearer unit is the idle state, output second enabling information that indicates the idle state, and control the second buffer to transmit, at the first transmission rate according to the second enabling information, all-zero data borne by the data bearer unit | ∿ S193 |

FIG. 6

EP 3 113 540 B1

Apparatus 300

First acquiring module 310

Receiving module 320

First processing module 330

First sending module 340

FIG. 7

Apparatus 300

Second acquiring module 350

First determining module 360

Second sending module 370

FIG. 8

First processing module 330

First determining unit 331

First processing unit 332

First buffer 333

FIG. 9

26

Apparatus 300

| Second determining module 380 | First processing module 330 | First sending module 340 |

FIG. 10

Apparatus 300

| Second buffer 390 | Second processing module 395 |

FIG. 11

Second processing module 395

| Second determining unit 396 | Second processing unit 397 |

FIG. 12

Apparatus 500

Memory
520

Processor
510

540

Transmitter
560

Buffer 530

Receiver
550

FIG. 13

**EP 3 113 540 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2658138 A1